# EUROPEAN PATENT APPLICATION

(11) **EP 2 945 070 A1**
(43) Date of publication of application: **18.11.2015**
(21) Application number: 13870412.7
(22) Date of filing: 19.12.2013
(51) Int. Cl.: G06F 17/30, G06F 3/048, G01C 21/26

(54) **INFORMATION DISPLAY PROCESSING SYSTEM, INFORMATION DISPLAY PROCESSING DEVICE, AND PORTABLE TERMINAL**

(30) Priority: 09.01.2013 JP 2013001767
(71) Applicant: Panasonic Intellectual Property Management Co., Ltd., Osaka-shi, Osaka 540-6207 (JP)
(72) Inventor: OHNO, Masahiro, Osaka 540-6207 (JP)
(74) Representative: Schwabe - Sandmair - Marx
(86) International application number: PCT/JP2013/007485
(87) International publication number: WO 2014/108965

(57) **Abstract**

An in-vehicle information display processing device (120) has: an image processing unit (125) that displays images on a display device (127); an operation detection unit (121) that detects the designation of an image within the image being displayed; a database control unit (130) that retrieves operating instruction information corresponding to the designated image, on the basis of identification information that has been associated in advance with the designated image and identification information that has been associated in advance with operating instruction information stored in an operating instruction database (131); and a signal transmission unit (126) that transmits the retrieved operating instruction information to a portable terminal (100). The portable terminal (100) has: a signal reception unit (111) that receives the operating instruction information; and a screen display processing unit (113) that displays the operating instruction information on a display screen (112).

## Description

### Technical Field

The present invention relates to an information display processing system, an information display processing apparatus and a portable terminal that display operation instructions of an electronic device using digital data.

### Background Art

A system that displays operation instructions (also referred to as "instruction manual") of an electronic device using digital data is known. For example, Patent Literature (hereinafter, referrred to as "PTL") 1 discloses a technique of displaying digital data showing operation instructions of a printer (hereinafter referred to as "operation instruction information") on a portable terminal. According to the technique of PTL 1, the printer sends a request for displaying operation instruction information together with information indicating a status of the priter to a server. Upon receiving the request for displaying operation instruction information, the server determines the operation instruction information to be displayed based on the status of the printer and sends the operation instruction information to the portable terminal. The portable terminal displays the operation instruction information received from the server. This allows the user to operate the printer with reference to the operation instruction information displayed on the portable terminal.

### Citation List

### Patent Literature

PTL 1 Japanese Patent Application Laid-Open No. 2012-14491

### Summary of Invention

### Technical Problem

However, according to the technique in PTL 1, the server determines the operation instruction information, and therefore the operation instruction information is not necessarily information desired by the user. That is, the technique of PTL 1 has a problem that the user cannot reliably obtain desired operation instruction information.

An object of the present invention is to provide an information display processing system, an information display processing apparatus and a portable terminal that allow the user to obtain desired operation instruction information more appropriately.

### Solution to Problem

An information display processing system according to an aspect of the present inveniton is a systme in which an information display processing apparatus and a portable terminal communicate with each other, in which the information display processing apparatus includes: a first image processing section that causes a display section of the information display processing apparatus to display one or more images; a first operation detection section that detects a first specification operation performed by a user to specify a desired image from among the images; a storage section that stores operation instruction information indicating an operation of the information display processing apparatus; and a search section that searches the storage section for operation instruction information corresponding to the image specified by the first specification operation based on identification information associated beforehand with the image specified by the first specification operation and identification information associated beforehand with the operation instruction information stored in the storage section; and a first communication section that transmits the found operation instruction information to the portable terminal, and the portable terminal includes: a second communication section that receives the operation instruction information from the information display processing apparatus; and a second image processing section that causes a display section of the portable terminal to display the operation instruction information.

An information display processing apparatus according to an asepct of the presen invention is an apparatus that communicates with a portable terminal, the apparatus including: an image processing section that causes a display section of the information display processing apparatus to display one or more images; an operation detection section that detects a specification operation performed by a user to specify a desired image from among the images; a storage section that stores operation instruction information indicating an operation of the information display processing apparatus; a search section that searches the storage section for operation instruction information corresponding to the image specified by the specification operation based on identification information associated beforehand with the image specified by the specification operation and identification information associated beforehand with the operation instruction information stored in the storage section; and a communication section that transmits the found operation instruction information to the portable terminal.

A portable terminal according to an aspect of the present invention is a terminal that communicates with an information display processing apparatus, the terminal including: a communication section that receives operation instruction information indicating an operation of the information display processing apparatus from the information display processing apparatus; and an image processing section that causes a display section of the portable terminal to display the operation instruction information, in which the operation instruction information is operation instruction information corresponding to an image specified by a user from among images displayed on a display section of the information display processing apparatus.

### Advantageous Effects of Invention

According to the present invention, the user can obtain desired operation instruction information more appropriately.

### Brief Description of Drawings

FIG. 1 is a block diagram illustrating a configuration of a vehicle-mounted information display processing system according to Embodiment 1 of the present invention;
FIG. 2 is a diagram illustrating a data structure example of the operation instruction information according to Embodiment 1 of the present invention;
FIG. 3 is a diagram illustrating a display example of a screen of the vehicle-mounted information display processing apparatus according to Embodiment 1 of the present invention;
FIG. 4 is a diagram illustrating another display example of a screen of the vehicle-mounted information display processing apparatus according to Embodiment 1 of the present invention;
FIG. 5 is a flowchart illustrating an operation of an operation detection section of the vehicle-mounted information display processing apparatus according to Embodiment 1 of the present invention;
FIG. 6 is a flowchart illustrating operation of a database control section of the vehicle-mounted information display processing apparatus according to Embodiment 1 of the present invention;
FIG. 7 is a diagram illustrating a display example of the operation item information according to Embodiment 1 of the present invention;
FIG. 8 is a diagram illustrating an example of an initial display state of a screen transition agent mode according to Embodiment 2 of the present invention;
FIG. 9 is a sequence diagram illustrating an operation example of a vehicle-mounted information display processing system according to Embodiment 2 of the present invention;
FIG. 10 is a sequence diagram illustrating an operation example of the vehicle-mounted information display processing system according to Embodiment 2 of the present invention;
FIG. 11 is a diagram illustrating a screen transition example of the vehicle-mounted information display processing system according to Embodiment 2 of the present invention;
FIG. 12 is a diagram illustrating a screen example of operation instructions displayed on a portable terminal according to Embodiment 3 of the present invention;
FIG. 13 is a diagram illustrating a display example of a vehicle-mounted information display processing system according to Embodiment 3 of the present invention;
FIG. 14 is a sequence diagram illustrating an operation example of the vehicle-mounted information display processing system according to Embodiment 3 of the present invention;
FIG. 15 is a diagram illustrating a display example of the vehicle-mounted information display processing system according to Embodiment 3 of the present invention;
FIG. 16 is a diagram illustrating a display example of the vehicle-mounted information display processing system according to Embodiment 3 of the present invention;
FIG. 17 is a diagram illustrating a display example of the vehicle-mounted information display processing system according to Embodiment 3 of the present invention;
FIG. 18 is a diagram illustrating a display example of a vehicle-mounted information display processing system according to Embodiment 4 of the present invention; and
FIG. 19 is a diagram illustrating an operation example of the vehicle-mounted information display processing system according to Embodiment 4 of the present invention.

### Description of Embodiments

### (Embodiment 1)

Embodiment 1 of the present invention will be described with reference to the accompanying drawings.

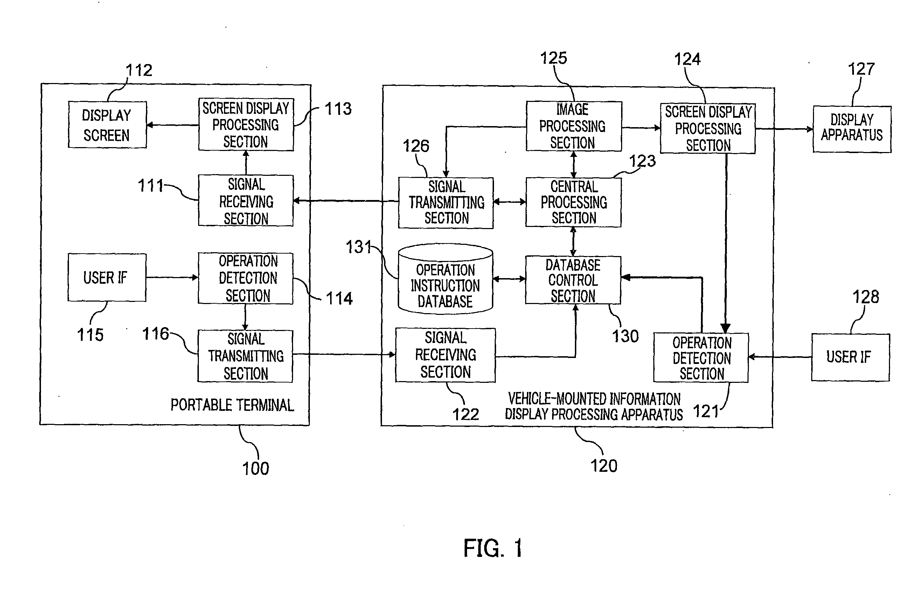

First, a configuration example of a vehicle-mounted information display processing system of the present embodiment will be described. FIG. 1 is a block diagram illustrating the configuration example of a vehicle-mounted information display processing system of the present embodiment. The vehicle-mounted information display processing system in FIG. 1 is an example of the information display processing system of the present invention.

In FIG. 1, the vehicle-mounted information display processing system of the present embodiment is provided with portable terminal 100, vehicle-mounted information display processing apparatus 120, display apparatus 127 and user IF (InterFace) 128. Portable terminal 100 is an example of a portable terminal of the present invention. Vehicle-mounted information display processing apparatus 120 is an example of an information display processing apparatus of the present invention.

Portable terminal 100 includes signal receiving section 111, display screen 112, screen display processing section 113, operation detection section 114, user IF 115, and signal transmitting section 116.

Signal receiving section 111 (an example of a second communication section) receives information from signal transmitting section 126 of vehicle-mounted information display processing apparatus 120 through wired communication or wireless communication and sends the information to screen display processing section 113.

Upon receiving information from signal receiving section 111, screen display processing section 113 (an example of a second image processing section) performs image processing based on the information. This image processing is processing of converting the received information to an image so that the image has an appropriate layout and size on display screen 112, for example. Screen display processing section 113 causes display screen 112 to display the image obtained by the conversion.

Display screen 112 (an example of a display section) is, for example, a liquid crystal display and displays an image from screen display processing section 113. This image may be either a still image or moving image, and includes at least one of a figure and a character.

Operation detection section 114 (an example of a second operation detection section) detects the user's operation carried out on user IF 115. Operation detection section 114 then sends information corresponding to the detected operation (e.g., reference number which will be described later) to signal transmitting section 116.

User IF 115 is used for the user to perform a predetermined input operation on portable terminal 100. The user can select information to be displayed on display screen 112 (e.g., character string or figure) on user IF 115. Note that user IF 115 is, for example, a touch panel or pointing device (e.g., mouse or track ball, or a switch on a steering wheel).

Signal transmitting section 116 (an example of a second communication section) transmits the information from operation detection section 114 to signal receiving section 122 of vehicle-mounted information display processing apparatus 120 through wired communication or wireless communication.

Portable terminal 100 is, for example, a cellular phone, smartphone, tablet, portable media player, portable navigation apparatus, portable game machine, or notebook type personal computer.

Vehicle-mounted information display processing apparatus 120 is connected to portable terminal 100, display apparatus 127 and user IF 128. Display apparatus 127 is a liquid crystal display or the like and displays an image corresponding to an image signal from vehicle-mounted information display processing apparatus 120. User IF 128 is a pointing device such as a touch panel, mouse or track ball, or a switch on a steering wheel or the like and receives the user's operation on vehicle-mounted information display processing apparatus 120. Vehicle-mounted information display processing apparatus 120 is mounted with a car navigation system or audio system or the like.

Vehicle-mounted information display processing apparatus 120 includes operation detection section 121, signal receiving section 122, central processing section 123, screen display processing section 124, image processing section 125, signal transmitting section 126, database control section 130, and operation instruction database 131. Note that database control section 130 and operation instruction database 131 may also be provided in an external apparatus connected to vehicle-mounted information display processing apparatus 120.

Operation detection section 121, central processing section 123, image processing section 125, signal transmitting section 126 and database control section 130 are implemented by, for example, a CPU (Centaral Processing Unit), ROM (Read Only Memory) and RAM (Random Access Memory). The CPU implements a computer program stored in the ROM while using the RAM as a working area.

Operation detection section 121 (an example of a first operation detection section) detects an operation received by user IF 128 and notifies database control section 130 of the operation.

Signal receiving section 122 (an example of a first communication section) receives information from signal transmitting section 116 of portable terminal 100 through wired communication or wireless communication and sends the information to database control section 130.

Central processing section 123 controls basic operations of vehicle-mounted information display processing apparatus 120. Details of the operation of central processing section 123 will be described later.

Screen display processing section 124 (an example of a first image processing section) performs processing so that an image processed in image processing section 125 is appropriately displayed on display apparatus 127 (an example of a display section) and causes display apparatus 127 to display the image.

Image processing section 125 (an example of a first image processing section) generates an image based on the processing result from central processing section 123. Image processing section 125 sends the generated image to signal transmitting section 126 or screen display processing section 124.

Signal transmitting section 126 (an example of the first communication section) transmits an image from image processing section 125 or information from central processing section 123 to signal receiving section 111 of portable terminal 100 through wired communication or wireless communication. Note that signal transmitting section 126 may integrate the image from image processing section 125 and the information (e.g., characters) from central processing section 123 and transmit the integrated information to portable terminal 100.

Database control section 130 (an example of a search section) controls operation instruction database 131. Details of the operation of database control section 130 will be described later.

Operation instruction database 131 (an example of a storage section) stores operation instruction information indicating operation instructions about vehicle-mounted information display processing apparatus 120. The operation instruction information is a character string or figure included in a general operation manual (also referrred to as "instruction manual").

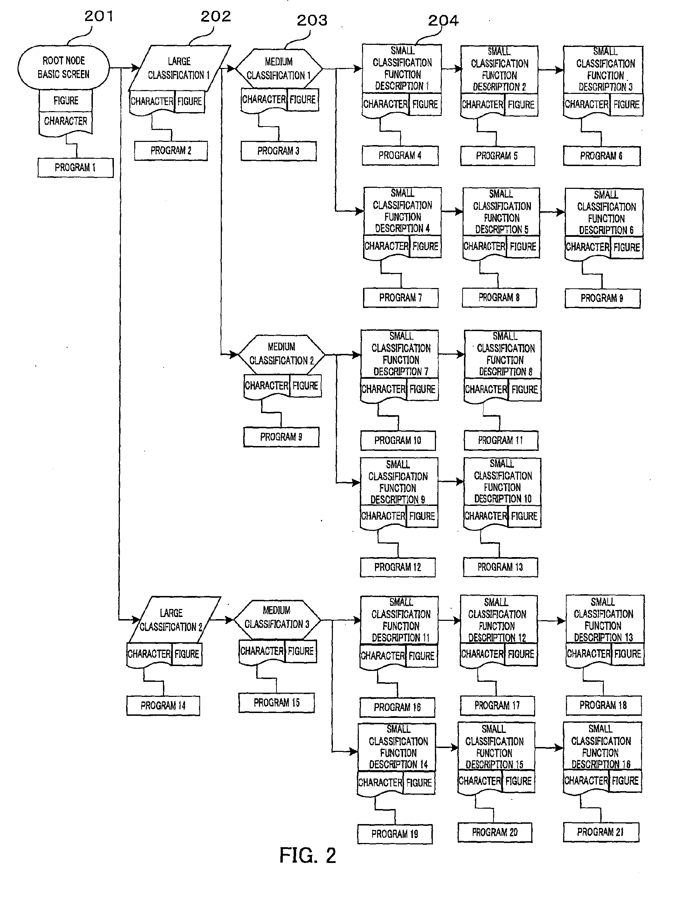

As shown in an example of its configuration in FIG. 2, the operation instruction information has a tree structure. The tree structure has, for example, root node 201 at the top, and large node 202 in a lower layer of root node 201, middle node 203 in a lower layer of large node 202, and small node 204 in a lower layer of middle node 203.

Each node is associated with a character string (including caption, descriptive text), figures, or identification information (hereinafter referred to as "reference symbol").

Here, the figures associated with the respective nodes include figures indicating the same contents as those of a screen displayed on display apparatus 127 in a state in which a function corresponding to operation instructions included in each node is executed (or selected) in a normal mode (which will be described later). Alternatively, the figures associated with the respective nodes include figures indicating contents simplified to an extent that the user can understand them intuitively. In the following description, these figures will be called "corresponding screen figures." In the following description, the "linked data" will also be handled as "corresponding screen figures."

As for the root node, for example, when vehicle-mounted information display processing apparatus 120 is provided with a car navigation system, operation instruction information corresponding to a basic screen of the car navigation system is set as the root node.

Here, the "basic screen" refers to a screen displayed on display apparatus 127 when a function generally considered to be used with a high frequency is executed. Therefore, when vehicle-mounted information display processing apparatus 120 is not provided with a car navigation system but is provided with, for example, a DVD player, a DVD operation screen may be set as the basic screen.

Each node is provided with a fragmentary program (an operation program which will be described later) for automatically processing an operation which is necessary to transition from a relevant node to the next node and which should be performed by the user using user IF 128.

This program may also be a method for adding information (e.g., coordinate information) obtained by the user operating user IF 128 to associated keywords in a character string belonging to the corresponding node.

Next, an operation example of the vehicle-mounted information display processing system of the present embodiment will be described.

Here, a case will be described where vehicle-mounted information display processing apparatus 120 is provided with a car navigation system (hereinafter referred to as "car navigation") as an example. Thus, vehicle-mounted information display processing apparatus 120 controls display apparatus 127 so as to display a current position of vehicle-mounted information display processing apparatus 120 (vehicle and user) and in the neighborhood on a map.

Here, a case will be described as an example where the user examines a function or operation of the car navigation. In the description of the present embodiment, a state of vehicle-mounted information display processing apparatus 120 after help button 11 (which will be described later) is operated until desired processing ends will be called "help mode" for convenience. Furthermore, a mode other than a screen transition agent mode and an operation guidance mode which will be described in Embodiments 2 to 4 will be called "normal mode."

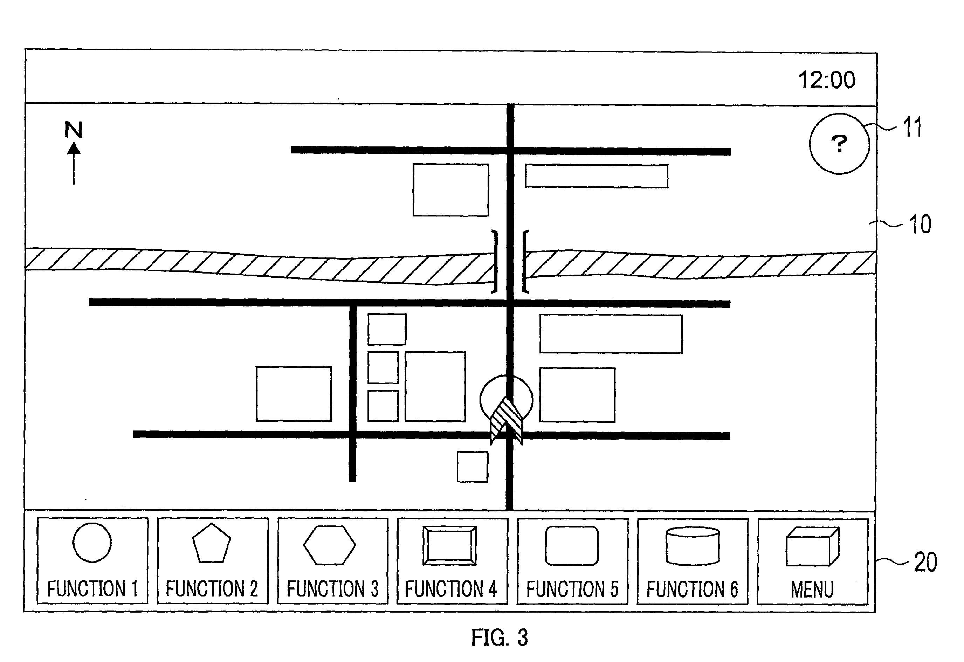

In the normal mode, display apparatus 127 displays, for example, an image shown in FIG. 3 (hereinafter referred to as "car navigation image") under the control of vehicle-mounted information display processing apparatus 120. In FIG. 3, the car navigation image includes map image 10 at a center and function image 20 in a lower part.

Map image 10 is an image illustrating a current position of vehicle-mounted information display processing apparatus 120 and in the neighborhood on the map. Function image 20 is an image illustrating each function of the car navigation using an icon. In the example in FIG. 3, icons corresponding to functions 1 to 6 and a menu are displayed respectively. The icons of functions 1 to 6 and the menu are examples of user IF 128 shown in FIG. 1.

In FIG. 3, help button 11 is displayed at the top right of map image 10. Note that help button 11 may be provided as a mechanical switch outisde the car navigation image. When the user operates help button 11, vehicle-mounted information display processing apparatus 120 proceeds to a help mode. In the car navigation image being displayed on display apparatus 127, vehicle-mounted information display processing apparatus 120 performs gray-out processing to light up only the display image corresponding to information relating to the user's input operation of the information included in the operation instruction information.

That is, vehicle-mounted information display processing apparatus 120 displays, in gray, car navigation images which are included in the operation instruction information but are not related to the operation (e.g., map displaying of a car position mark of the vechile or a peripheral region of the car position or the like).

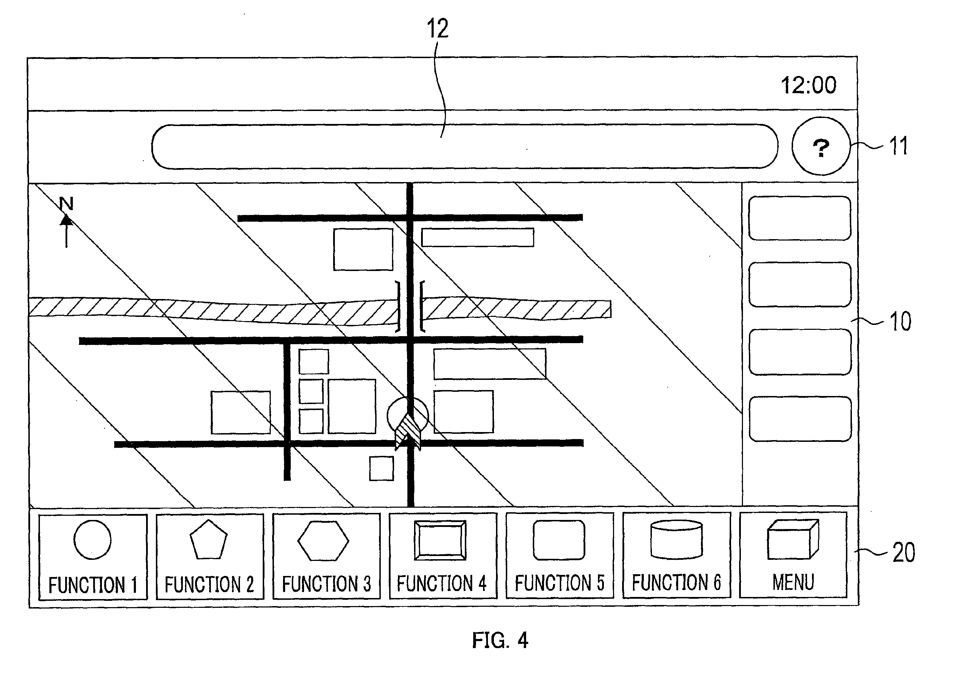

FIG. 3 shows a display example of a car navigation image when gray-out processing is performed by the user operating help button 11. In FIG. 4, map image 10 is displayed in gray, and function image 20 is highlighted.

The present embodiment has a feature of performing gray-out processing as well as the following processing. That is, the present embodiment scales down a whole or part (e.g., region other than the region in which icons are displayed) of the car navigation image being displayed and provides keyword input region 12 as a region for inputting a keyword to enable a keyword search. Provision of keyword input region 12 increases the degree of freedom of search and allows the help function to be used more easily. In this case, keyword input region 12 is preferably set outside the range of gray-out processing.

Help button 11 is part of an image displayed on display apparatus 127 shown in FIG. 1 and is an example of an operation target of user IF 128. Thus, when help button 11 is operated, in FIG. 1, operation detection section 121 notifies central processing section 123 that help button 11 has been operated. Central processing section 123 transmits a program starting signal to portable terminal 100 via signal transmitting section 126. In this case, central processing section 123 transmits a gray-out processing execution signal to image processing section 125. Upon receiving the gray-out processing execution signal, image processing section 125 performs the aforementioned gray-out processing. However, even after the gray-out processing is done, the screen being displayed (e.g., map displaying of the peripheral region of the car position in FIG. 4) may be changed and caused to function like a normal operation.

Portable terminal 100 that has received the program starting signal starts a viewer application and is set in a standby state. The viewer application referred to here is an application program that allows the user to browse operation instruction information on display screen 112. Note that upon receiving the program starting signal, portable terminal 100 may not start the viewer application but may display the fact that the program starting signal has been received in part of display screen 112 so that the user may freely use portable terminal 100.

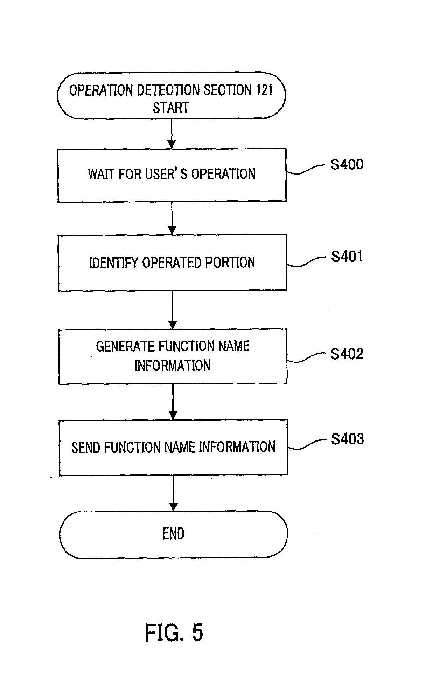

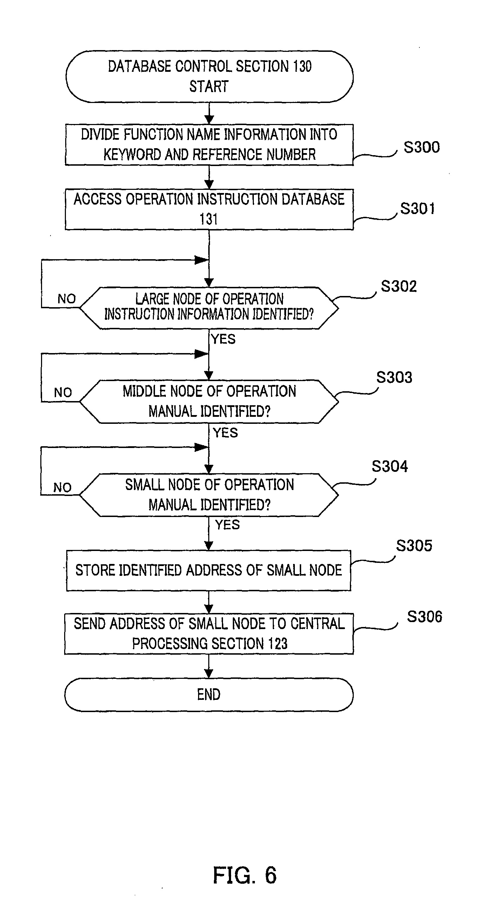

Hereinafter, in a screen example in FIG. 4, an operation of vehicle-mounted information display processing apparatus 120 will be described by taking a case where the user operates an icon of the function that the user wants to examine as an example. FIG. 5 is a flowchart illustrating an operation example of operation detection section 121. FIG. 6 is a flowchart illustrating an operation example of database control section 130.

The flow in FIG. 5 will be described first.

In step S400, operation detection section 121 waits for the user to perform operation. Here, suppose that the user specifies an icon of function 1 from among function images 20 shown in FIG. 4 and operates the icon, for example. However, the keyword inputted to keyword input region 12 can be handled in the same way as the icon specified by the user.

In step S401, operation detection section 121 specifies the part operated by the user. Here, operation detection section 121 identifies the display part of the icon with function 1.

In step S402, operation detection section 121 generates function name information based on the identified part. This generation will be described more specifically below. First, operation detection section 121 acquires car navigation image information from screen display processing section 124 and acquires coordinate information from user IF 128.

Next, operation detection section 121 identifies an image corresponding to the coordinate information of the car navigation image information and generates function name information based on information associated with the identified image in advance. The "coordinate information" is information indicating coordinates on the screen of the icon operated by the user. The car navigation image information is information indicating a car navigation image being displayed on display apparatus 127.

Each image (e.g., icon) making up the car navigation image information is associated with an image-related keyword and a reference number. For example, in the car navigation image information, an icon making up function image 20 is associated with a function name as a keyword and a reference number that can identify the function name.

Thus, the function name information is made up of a keyword and a reference number. Although an example of a reference symbol will be described below as a reference number, the reference symbol is not limited to numbers.

When the user inputs a search keyword to keyword input region 12, the search keyword inputted by the user in the "function name" described in above step S402 (or part of the search keyword) is applied without a change.

In step S403, operation detection section 121 sends the generated function name information to database control section 130. This function name information is compared with the operation instruction information (e.g., character string, schematic diagram) stored in operation instruction database 131 by database control section 130. Details of this operation are shown in a flowchart in FIG. 6.

Next, the flowchart in FIG. 6 will be described.

In step S300, database control section 130 divides the function name information from operation detection section 121 into a keyword and a reference number. The reference number is provided with a large classification identification number (large node identification number), medium classification identification number (middle node identification number), and small classification identification number (small node identification number). Database control section 130 temporarily stores keywords and reference numbers. Examples of the storage destination include a storage medium of database control section 130 or a storage medium outside database control section 130, but a storage medium easily accessible by database control section 130 is preferable.

In step S301, database control section 130 accesses operation instruction database 131. First, database control section 130 starts comparison from a first large node among large nodes of operation instruction database 131.

In step S302, database control section 130 determines whether or not a large node of operation instruction information (large classification of index of operation manual) has been successfully identified. This determination is made as follows. First, database control section 130 accesses the first large node based on the address of the first large node and reads the reference number. Database control section 130 then compares the reference number of the first large node with the large classification identification number of the reference number divided from the function name information.

When the above-described comparison result shows that both numbers do not match (step S302: NO), database control section 130 determines that the large node has not been successfully identified. Database control section 130 then changes the comparison target from the first large node to the next second large node. Database control section 130 reads a reference number of the second large node as in the same way as in the first large node, and compares its reference number with the large classification identification number. Thus, when the comparison result shows a mismatch, database control section 130 changes the large node to be compared and compares the reference number of the changed large node with the large classification identification number.

On the other hand, when the comparison result shows a match, (step S302: YES), database control section 130 determiens that the large node has been successfully identified. Database control section 130 stores the address of the large node and reads a middle node which belongs to a level lower than the large node.

In step S303, database control section 130 determines whether or not the middle node of the operation instruction information (medium classification of index of operation manual) has been successfully identified. This deremination is made in the same way as in step S302 as follows. First, database control section 130 accesses the first middle node based on the address of the first middle node and reads its reference number. Database control section 130 compares the reference number of the first middle node with the medium classification identification number of the reference number divided from the function name information.

When the above-described comparison result shows that both numbers do not match (step S303: NO), database control section 130 determines that the middle node has not been successfully identified. Database control section 130 then changes the comparison target from the first middle node to the next second middle node. Database control section 130 reads the reference number of the second middle node in the same way as in the first middle node and compares its reference number with the medium classification identification number. Thus, when the comparison result shows a mismatch, database control section 130 changes the middle nodes to be compared and compares the reference number of the changed middle node with the medium classification identification number.

Meanwhile, when the above-described comparison result shows that both numbers match (step S303: YES), database control section 130 determines that the middle node has been successfully identified. Database control section 130 stores the address of the middle node and reads the small node which belongs to a level lower than the middle node.

In step S304, database control section 130 determines whether or not the small node of the operation instruction information (small classification of indices of operation manual) has been successfully identified. In this determination, reference numbers are compared first as in the case of steps S302 and S303. Note that this comparison method has already been described above, and therefore description thereof will be omitted here.

In addition to the comparison between reference numbers, database control section 130 also performs processing of comparing the keyword divided from the function name information with a character string associated with each small node (descriptive text). In this comparison, if the keyword matches the character string, database control section 130 determines that the small node has been successfully identified.

Meanwhile, when the keyword does not match the character string, database control section 130 determines that the small node has not been successfully identified, changes the comparison target to the character string of the next small node and compares it with the keyword again.

As a result of these two comparisons, database control section 130 identifies a small node that has a reference number that matches the small classification identification number and a small node with which a character string that matches the keyword is associated.

In step S305, database control section 130 stores the address of the identified small node, for example, in the RAM of database control section 130. Note that among the specified small nodes, database control section 130 stores the address of the small node in which the small classification identification number completely matches the reference symbol at the first address of the RAM. Thereafter, database control section 130 stores addresses of small nodes in the RAM in descending order of the number of character strings that match the keyword.

In step S306, database control section 130 sends the addresses of the stored small nodes to central processing section 123 as block link information. The "block link information" means information to be linked to any given block stored in operation instruction database 131.

The flow in FIG. 6 ends here and subsequent operation will be described below.

Central processing section 123 sends the block link information to portable terminal 100 via signal transmitting section 126. In this way, portable terminal 100 receives the notification that generation of block link information is completed which is linkable to the operation instructions of the user desired function.

In portable terminal 100, screen display processing section 113 receives the block link information via signal receiving section 111. Screen display processing section 113 then causes display screen 112 to display a list of link destinations based on the received block link information.

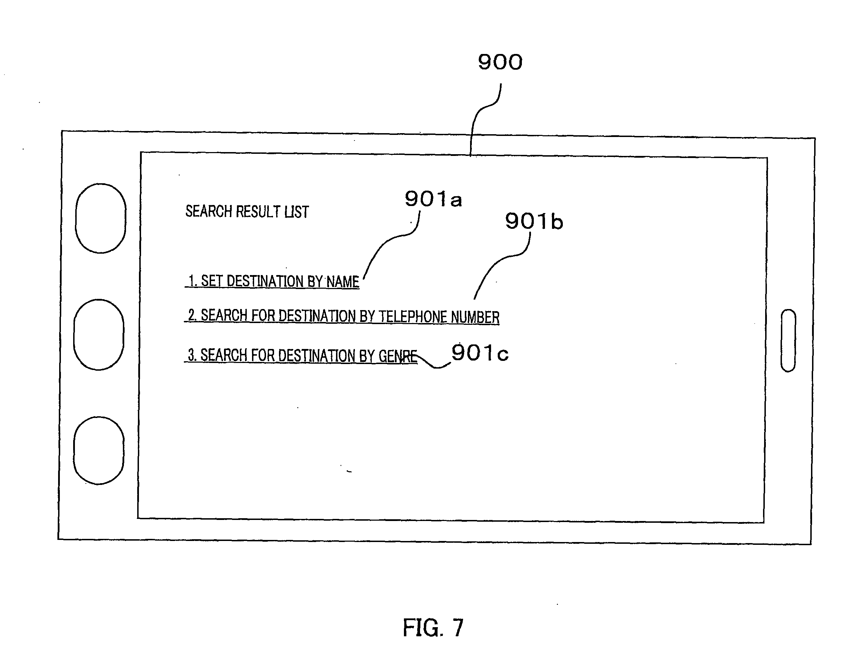

FIG. 7 is a diagram illustrating a display example of the operation item information according to Embodiment 1 of the present invention. More specifically, FIG. 7 illustrates an example of the list of link destinations to be displayed on display screen 112 based on the block link information received by screen display processing section 113.

The example shown in FIG. 7 is an example of the list obtained when the user searches for a "destination" related-operation instruction information. As shown in FIG. 7, search result list screen 900 displays operation item information 901a to 901c of the "destination"-related operation instruction information.

Thus, for example, it may be intuitive and easy to understand if screen display processing section 113 displays character strings that match a keyword in itemized form and in a list form in ascending order of address numbers, and further, for example, screen display processing section 113 may also display a schematic diagram or character string of the link destination in small size.

Moreover, the block link information and a simple description of the link destination block of the block link information (operation item information) may be associated with each other beforehand and display screen 112 may display the corresponding block link information and the linked operation item information.

When central processing section 123 transmits the block link information to portable terminal 100, central processing section 123 sends a gray-out cancellation signal to image processing section 125. Thus, image processing section 125 cancels the gray-out processing on the car navigation image being displayed on display apparatus 127 via screen display processing section 124 (cancellation of the help mode). In this way, the car navigation image shown in FIG. 4 is returned to the state shown in FIG. 3 (transition to the normal mode or other mode).

The user operates user IF 115 to select a given link from among link destinations in the list displayed on display screen 112 of portable terminal 100.

Operation detection section 114 that has detected this operation sends the address of the part on which the operation has been performed to vehicle-mounted information display processing apparatus 120 via signal transmitting section 116. This address is sent from signal receiving section 122 to database control section 130 in vehicle-mounted information display processing apparatus 120.

Database control section 130 accesses operation instruction database 131 based on the received address and acquires operation instruction information corresponding to the address of the operated part. Database control section 130 sends the acquired operation instruction information to central processing section 123.

Central processing section 123 transmits the operation instruction information to signal receiving section 111 via signal transmitting section 126. This operation instruction information is sent from signal receiving section 111 to screen display processing section 113 in portable terminal 100.

Screen display processing section 113 reconfigures the received operation instruction information to a size that fits display screen 112 and sends it to display screen 112. This causes the information of the link destination selected by the user, that is, items, character string, figures or the like of the operation manual to be displayed on display screen 112.

As described above, according to the present embodiment, when the user operates an icon with a function, information of which the user wants to obtain from the car navigation image displayed on display apparatus 127, the operation manual about the function is displayed on display screen 112 of portable terminal 100 which is different from vehicle-mounted information display processing apparatus 120. Thus, the user can obtain more appropriate operation instruction information about a desired function.

### (Embodiment 2)

Embodiment 2 of the present invention will be described with reference to the accompanying drawings.

For convenience of description, Embodiment 2 will be described assuming that a screen transition agent mode is set. The "screen transition agent mode" is assumed to start from a state in which operation instructions of vehicle-mounted information display processing apparatus 120 are displayed on portable terminal 100 described in above Embodiment 1.

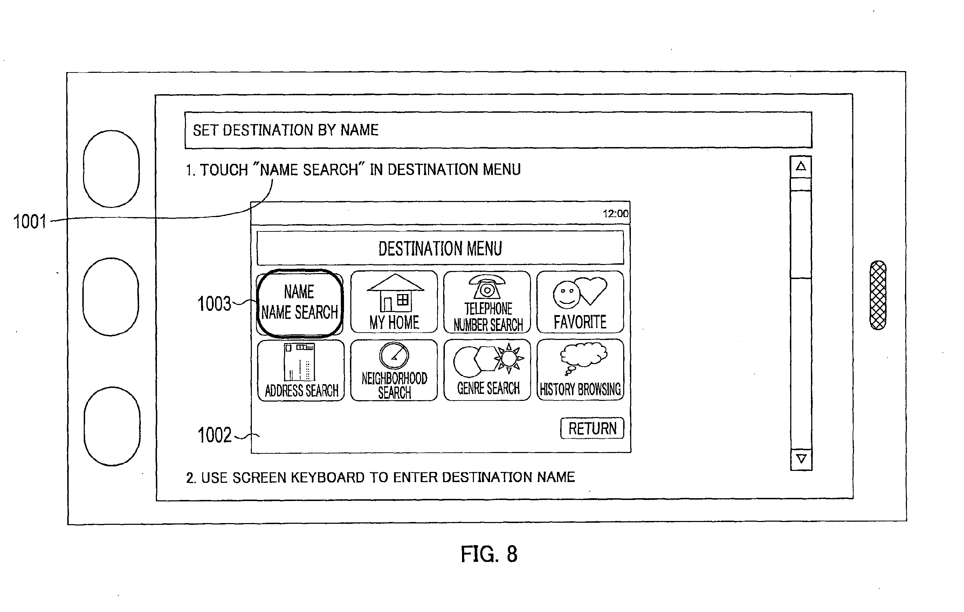

FIG. 8 illustrates this state. That is, FIG. 8 is a diagram illustrating an example of an initial display in the screen transition agent mode according to Embodiment 2 of the present invention and illustrates a state after the user selects and operates operation item information 901 a from the state shown in FIG. 7.

In the following description, the screen displayed on display screen 112 of portable terminal 100 is called "operation instruction information screen."

On the operation instruction information screen, icon 1003 out of schematic diagram 1002 and character string 1001 is highlighted as a part to be operated. Character string 1001 and schematic diagram 1002 are images displayed on the screen of display apparatus 127 when the user actually performs input operation on vehicle-mounted information display processing apparatus 120. Icon 1003 is an icon corresponding to the operation item information selected by the user.

Alternatively, the screen transition agent mode is assumed to start in a state in which software for displaying the operation manual has already been started in portable terminal 100 and operation instructions are displayed.

An operation example of a vehicle-mounted information display processing system according to the present embodiment will be described. Note that a configuration example of the vehicle-mounted information display processing system of the present embodiment is the same as that in FIG. 1 described in Embodiment 1, and therefore description thereof will be omitted.

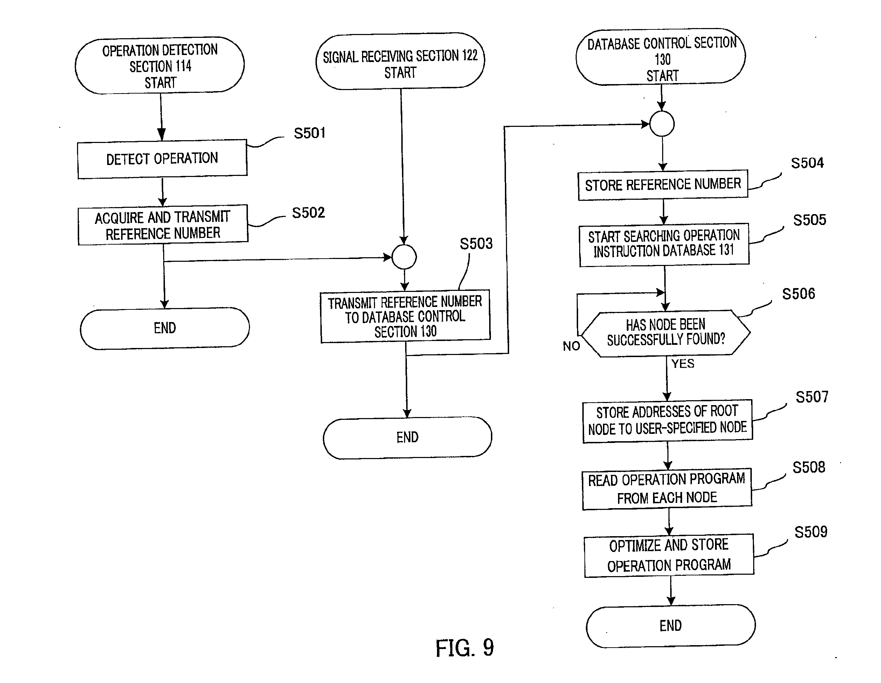

First, a flow in FIG. 9 will be described.

When the screen transition agent mode starts, signal receiving section 122 of vehicle-mounted information display processing apparatus 120 waits to receive a signal (information) from portable terminal 100.

Here, suppose that operation information (e.g., character string or figure or the like which are description items of operation instruction information) is displayed on display screen 112 of portable terminal 100 (see FIG. 8 as (an example). The user selects a displayed character string or figure using user IF 115. The character string or figure selected here indicates the user-desired function. Examples of this function include playback of a CD (Compact Disc), radio reception, TV reception, and setting of a car navigation.

When the user operates icon 1003 selected on the operation instruction information screen (S501), in step S502, operation detection section 114 acquires a reference symbol linked to icon 1003 selected by the user. Operation detection section 114 transmits the acquired reference number to vehicle-mounted information display processing apparatus 120 via signal transmitting section 116. However, the reference symbol may also be linked to character string 1001.

In step S503, signal receiving section 122 outputs the reference number received from portable terminal 100 to database control section 130.

In step S504, database control section 130 stores the reference number.

In step S505, database control section 130 searches for a node that has the same reference number as the stored reference number from operation instruction database 131.

In step S506, database control section 130 repeats the search until the node that has the same reference number as the stored reference number is found (step S506: NO). When the node has been successfully searched (step S506: YES), the flow proceeds to step S507. The searched node here will be hereinafter referred to as "user specified node."

In step S507, database control section 130 finds out a shortest route (address) from the root node to the user specified node. Here, the root node is assigned, for example, an operation program for displaying a corresponding screen diagram which corresponds to the basic screen of vehicle-mounted information display processing apparatus 120 (see Embodiment 1 for the corresponding screen diagram).

The user specified node is also assigned, for example, an operation program for displaying a corresponding screen diagram which corresponds to the screen displayed when the user-desired function is executed in a normal mode.

The method of finding out the route may be the same as that of, for example, the flowchart processing in FIG. 6. However, database control section 130 does not perform a keyword search in the aforementioned description in FIG. 6 but searches for the shortest route to the user specified node.

Database control section 130 stores addresses from the root node to the user specified node, in other words, a flow of a series of screen transitions in, for example, DMA (Direct Memory Accessing).

In step S508, database control section 130 reads an operation program assigned to each node accessible from the stored screen transition flow, that is, each node from the root node to the user specified node. The operation program is a program for displaying, for example, a corresponding screen diagram included in the node to which the operation program is assigned.

Note that the operation program assigned to the root node is a program for displaying a map guidance screen (an example of the basic screen). The map guidance screen is, for example, the car navigation image shown in FIG. 3.

In step S509, database control section 130 optimizes and stores each operation program so that the read operation program in order of the screen transition flow is correctly executed and processed. The optimized operation program is called "screen transition program."

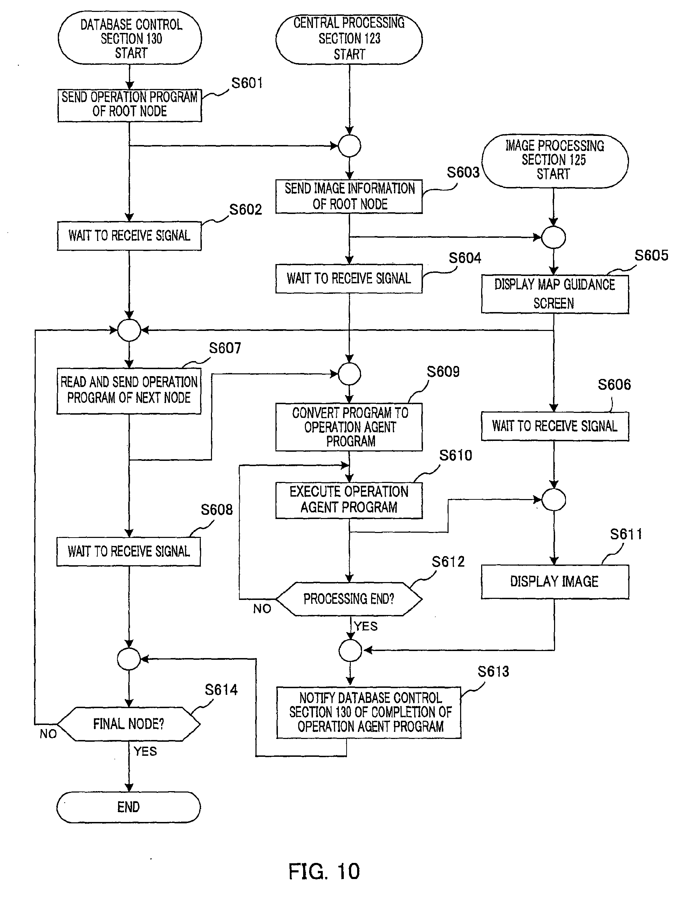

Next, a flow in FIG. 10 will be described. The flow in FIG. 10 is run after the flow in FIG. 9.

In step S601, database control section 130 develops the first part of the screen transition program, that is, the operation program of the root node and sends the program to central processing section 123.

In step S602, database control section 130 waits to receive a signal.

In step S603, central processing section 123 executes the operation program of the root node and outputs image information of the root node to image processing section 125. The image information of the root node is information indicating the map guidance screen.

In step S604, central processing section 123 waits to receive a signal.

In step S605, image processing section 125 displays the map guidance screen on display apparatus 127 based on the image information of the root node via screen display processing section 124. Image processing section 125 notifies database control section 130 via central processing section 123 that the display content is changed to the map guidance screen.

In step S606, image processing section 125 waits to receive a signal.

In step S607, upon receiving the notification that the display content has been changed to the map guidance screen, database control section 130 reads an operation program of a node next to the root node from the screen transition program and sends the program to central processing section 123. The operation program of the node next to the root node is, for example, a program for displaying a menu screen.

The operation program of each node after the node next to the root node is originally executed based on the user's operation, but in the present embodiment, the operation program is automatically executed without requiring the user's operation.

For this reason, central processing section 123 adds an execution instruction, such as providing a standby time for each line described in the operation program. Details of this will be described later in step S609.

In step S608, database control section 130 waits to receive a signal.

In step S609, central processing section 123 converts the operation program from database control section 130 to an operation agent program. The "operation agent program" is a program that converts an operation program to be originally executed based on the user's operation to one that will be automatically executed without requiring the user's operation.

Central processing section 123 adds a predetermined instruction to the operation program from database control section 130 so that the same appropriate processing flow is obtained as in the case where the operation program is executed by the user's operation. Examples of the instruction added here include a standby instruction or a processing instruction for changing an icon color when the icon is selected. Adding an instruction in this way causes the operation program to be converted to an operation agent program.

In step S610, central processing section 123 executes the operation agent program. In executing this operation agent program, central processing section 123 also executes a portion to be originally executed by the user (e.g., selection of an icon).

Central processing section 123 outputs the image information of the node obtained by executing the operation agent program to image processing section 125. Here, central processing section 123 sends the image information obtained to image processing section 125 every time one process (instruction) of the operation agent program is executed.

In step S611, image processing section 125 causes display apparatus 127 to display the image information from central processing section 123 via screen display processing section 124 so as to be reflected on an image being displayed.

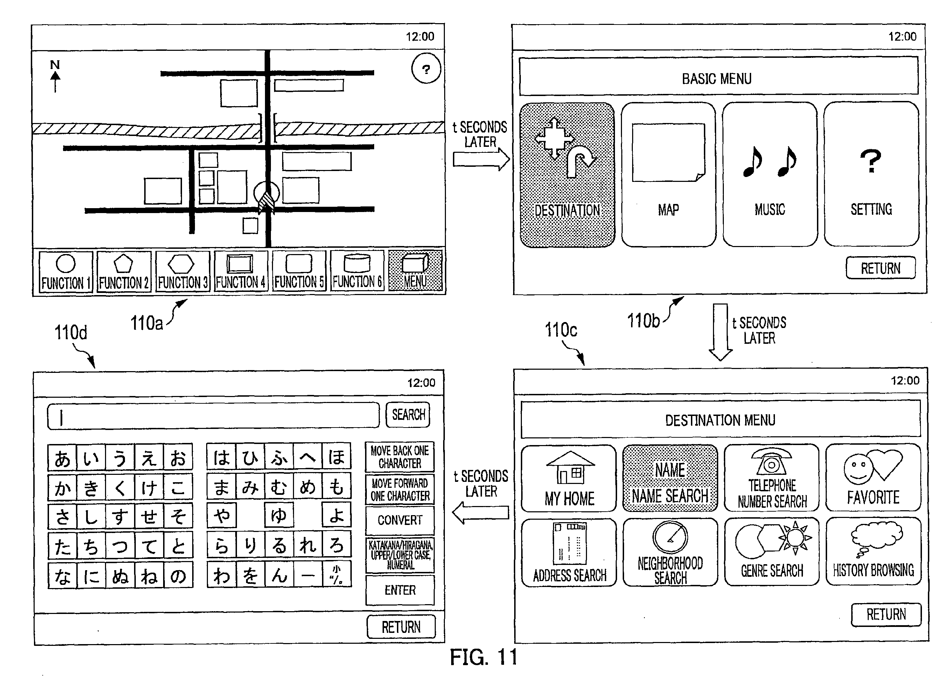

FIG. 11 shows an example of transition of a screen displayed on display apparatus 127 when the operation agent program is executed. The example shown in FIG. 11 illustrates a screen transition when the user sets a destination. More specifically, in order for the user to search (set) a destination to be set from the basic screen, an example is shown to indicate how an operation agent program displays the screen transition until a screen from which the user can input characters (character input screen) is displayed.

As shown in FIG. 11, when the operation agent program starts, basic screen 110a is displayed on display apparatus 127 first. Display apparatus 127 also displays screens (110b, 110c) requiring the user operation from displaying of basic screen 110a to displaying of character input screen 110d every t seconds.

On each screen displayed, an icon (or the like) that should be operated to transition to the next screen is highlighted (emphasized in color, lit up, blinked or enlarged in the display so as to be clearly distinguishable from other icons).

However, the number of screens necessary for screen transition is not limited to four (110a to 110d), and the display time of each screen need not be fixed to t seconds.

Note that central processing section 123 does not receive any signal from operation detection section 121 until all the processes of the operation agent program are executed and all the processing information is sent to image processing section 125.

While central processing section 123 does not send image information to image processing section 125 (e.g., during execution of standby to receive a signal, during execution of a standby instruction of the operation agent program), for example, the current location on the map guidance screen may change successively. Thus, during execution of the operation agent program, central processing section 123 successively outputs also image information indicating a change in the current location to image processing section 125.

Database control section 130 does not perform the next process until receiving a notification of completion of program execution from image processing section 125 while holding the address of the current node.

In step S612, central processing section 123 repeats the processes until all the processes of the operation agent program are executed (step S612: NO). When all the processes of the operation agent program end (step S612: YES), the flow proceeds to step S613.

In step S613, when the last process of the operation agent program ends, central processing section 123 notifies database control section 130 that the operation agent program has been completed. Upon receiving the notification of completion of the program, database control section 130 executes determination processing of reading information of the next node.

In step S614, upon receiving the notification that the operation agent program has been completed, database control section 130 determines whether or not the node read in step S607 is a final node (user specified node).

For example, when the address of the next node is registered, database control section 130 determines that the node is not the final node (step S614: NO). The flow then returns to step S607. Thus, database control section 130 further reads the operation program of the next node from the screen transition program and sends it to central processing section 123. After that, the flow proceeds to aforementioned steps S609 to S613.

When the execution of the operation agent program in the final node ends (step S614: YES), the flow ends (cancellation of the transition agent mode).

After that, central processing section 123 returns to a normal processing operation and waits to receive a signal from operation detection section 121. Database control section 130 and central processing section 123 delete all the information stored in the flows shown in FIGS. 9 and 10.

As described above, according to the present embodiment, when the user selects an item (character string, figure) that describes a desired function of an image of the operation instruction displayed on portable terminal 100, screens are automatically changed and displayed on display apparatus 127 from the basic screen to a screen on which a desired function can be started.

When, for example, the user selects an item describing "playback of a CD" from the display screen of portable terminal 100, display apparatus 127 automatically performs screen transition, for example, from the map guidance screen → menu screen → music top screen → CD playback screen, which should originally be executed based on the user's operation. This allows the user to know which screens should be operated to make transition up to the screen on which a desired function can be started.

When the user desires a plurality of operations and corresponding functions requiring transitions of a plurality of screens, the user only needs to select a description item displayed on portable terminal 100. In this way, screens are automatically transitioned on display apparatus 127 without the user performing a plurality of operations and a screen on which a desired function can be started is displayed finally. That is, the user can promptly start the function to be used.

### (Embodiment 3)

For convenience of description, Embodiment 3 will be described assuming that an operation guidance mode is set.

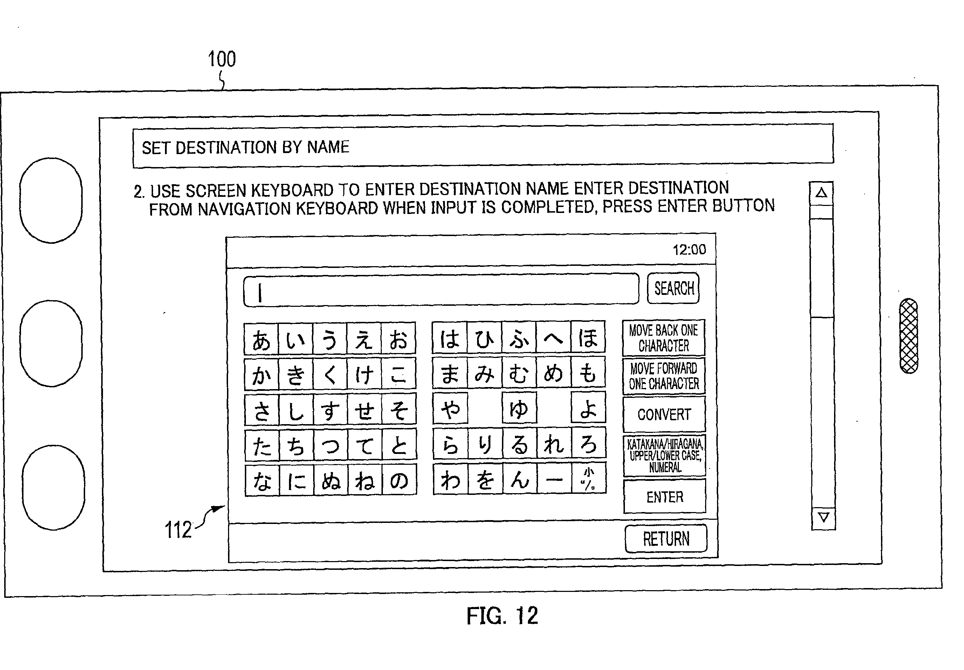

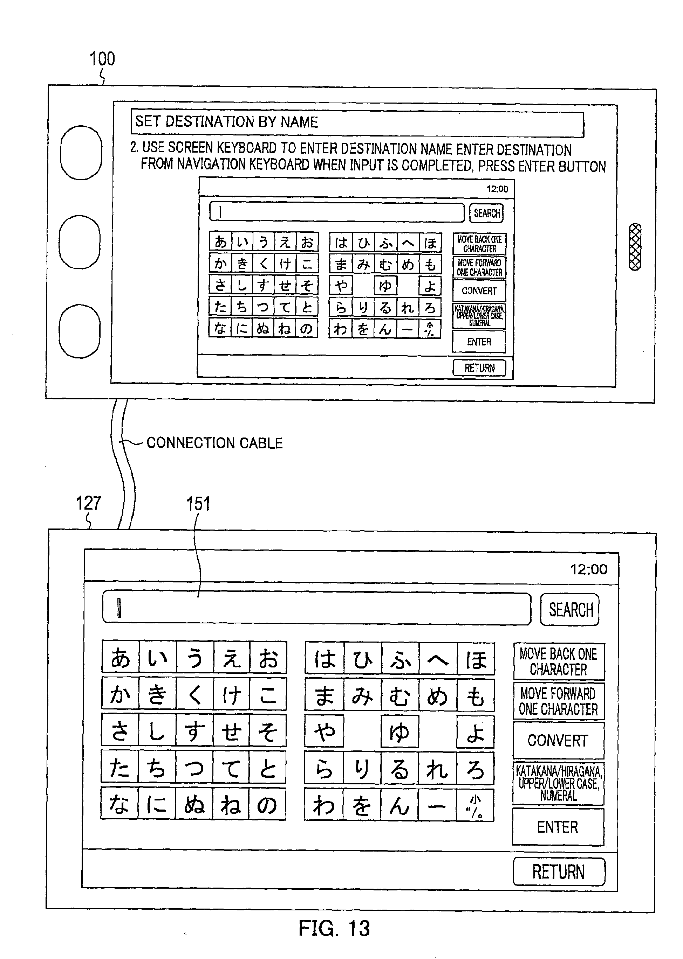

The "operation guidance mode" is assumed to start from a state in which the processing of the screen transition agent mode in above-described Embodiment 2 is completed and operation instructions (operation instruction information screen as illustrated in FIG. 12 and FIG. 13) of vehicle-mounted information display processing apparatus 120 are displayed on portable terminal 100. Alternatively, Embodiment 3 assumes that the operation guidance mode starts from a state in which software for displaying the operation manual has already started on portable terminal 100 and the operation instruction information screen is displayed.

Embodiment 3 of the present invention will be described with reference to the accompanying drawings. Embodiment 3 shows an example of application of an information display processing system to a user operation. Since the configuration example of the vehicle-mounted information display processing system according to the present embodiment is the same as the configuration shown in FIG. 1 described in Embodiment 1, description here will be omitted.

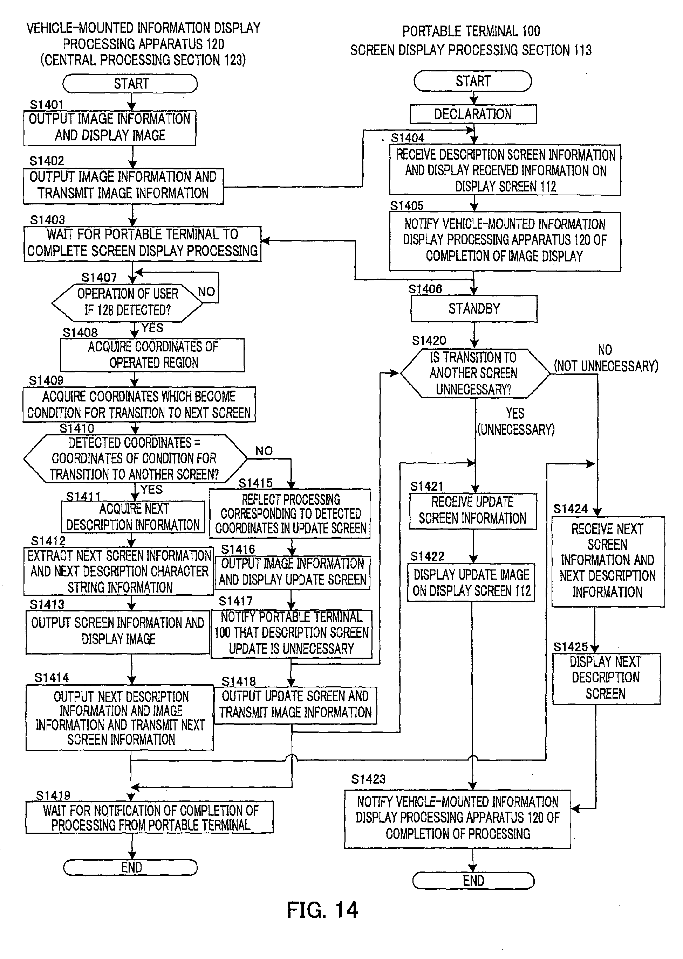

Operations of portable terminal 100 and vehicle-mounted information display processing apparatus 120 according to Embodiment 3 of the present invention will be described below using FIG. 14.

Note that, an assumption is made that, in an initial state, screen display processing section 113 of portable terminal 100 shows that a prerequisite condition "transition to the next instruction screen" has been declared. The prerequisite condition declaration referred to here means that the screen transitions to another instruction screen when vehicle-mounted information display processing apparatus 120 notifies portable terminal 100 that the user has performed an operation on vehicle-mounted information display processing apparatus 120.

In the present embodiment, of the display contents of the operation instruction information screen displayed on portable terminal 100 described in above-described Embodiment 2, the same (or equivalent) contents as the diagram showing the display screen of vehicle-mounted information display processing apparatus 120 are displayed on the screen of display apparatus 127.

In this case, as shown in FIG. 14, in vehicle-mounted information display processing apparatus 120, central processing section 123 outputs the image information to image processing section 125 and causes display apparatus 127 to display the image (step S1401). Along with this, central processing section 123 outputs the image information to signal transmitting section 126 and transmits the image information to portable terminal 100 (step S1402). After step S1402, central processing section 123 waits for portable terminal 100 to complete the screen display processing (step S1403).

Then, in portable terminal 100, screen display processing section 113 reflects (combine) the image information received from vehicle-mounted information display processing apparatus 120 in the location in which the operation instruction information screen is displayed (step S1404). After that, screen display processing section 113 notifies vehicle-mounted information display processing apparatus 120 that the reflection of the image display in display screen 112 is completed (step S1405). After performing the notification process in step S1405, screen display processing section 113 enters a standby state (step S1406).

Upon receiving the notification from portable terminal 100 through the process in step S1405, operation detection section 121 in vehicle-mounted information display processing apparatus 120 detects whether or not the user has performed an input operation on user IF 128 (step S1407). When the user's operation is not detected in step S1407 (step S1407: No), the detection process in step S1407 is repeated.

When the user's input operation is detected in step S1407 (step S1407: Yes), coordinates of the operated region on the screen are acquired from operation detection section 121 (step S1408). After that, coordinates of a "location (icon) to be operated" on the current screen which become a condition for transition to the next screen are acquired from database control section 130 (step S1409).

After step S1409, the coordinates detected in step S1408 are compared with the coordinates acquired in step S1409 and the following contents are determined (step S1410).

That is, as illustrated in FIG. 13, it is determined whether the user's operation is a selection operation on the screen currently being displayed (current screen) or a confirmation operation involving transition from the current screen to another screen which is different from the current screen. The selection operation is, for example, an operation on each icon or "conversion" icon described in the 50 Japanese phonetic symbols. The confirmation operation is, for example, an operation on a "search" icon or "return" icon.

In step S1410, it is determined whether or not the user's operation is a confirmation operation involving transition to another screen. If it is "Yes" in step S1410, that is, it is determined that a confirmation operation involving transition to another screen has been performed, central processing section 123 acquires the following instruction information from database control section 130 (step S1411).

After acquiring information in step S1411, central processing section 123 extracts, from this information, a figure and a character string necessary for the operation instruction information screen to be displayed next (step S1412). Central processing section 123 then outputs the extracted information to image processing section 125 and causes display apparatus 127 to display the information (step S1413). Central processing section 123 outputs the next operation instruction information and corresponding image information to signal transmitting section 126 and causes them to be transmitted to portable terminal 100 (step S 1414).

Here, the description is returned to the process when "No" is determined in step S1410. When it is "No" in step S1410, that is, it is determined that the user's operation is a selection operation on the current screen, the process corresponding to the coordinates acquired in step S1408 is reflected in the screen display contents as an update screen to the current screen (step S1415).

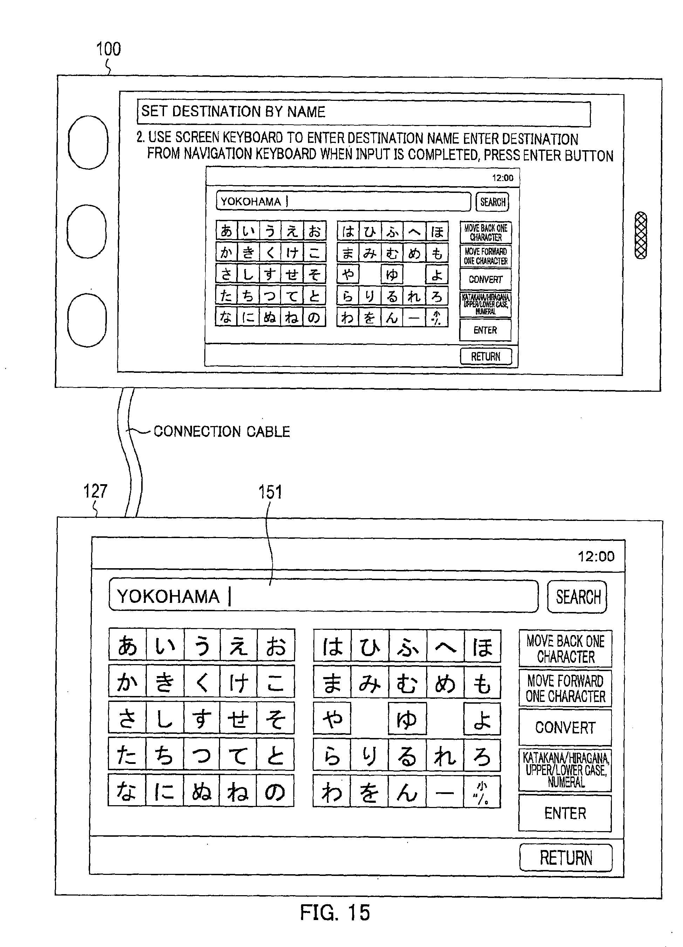

Here, the "process corresponding to the coordinates acquired in step S1408" refers to, for example, the process of enumerating characters selected when the user selects icons described in the 50 Japanese phonetic symbols as shown in FIG. 15 in a predetermined region (input character string region 151) or the like.

After finishing the process in step S1415, central processing section 123 outputs image information on the update screen to image processing section 125 and causes display apparatus 127 to display the update screen (step S1416). Along with this displaying operation, central processing section 123 notifies portable terminal 100 that transition to another screen (instruction screen) is unnecessary (step S1417). After that, central processing section 123 transmits data of the update screen to portable terminal 100 via signal transmitting section 126 (step S1418).

After finishing the processes in step S1414 and step S1418, central processing section 123 waits to receive a notification of completion of the process from portable terminal 100 (step S1419), and upon receiving the notification of completion of the process from portable terminal 100 which will be described later, central processing section 123 finishes the process.

The description will return to the processing flow to be executed by screen display processing section 113 of portable terminal 100. When central processing section 123 of vehicle-mounted information display processing apparatus 120 performs the process in step S1417 after a standby state is set in step S1406, screen display processing section 113 receives a notification from vehicle-mounted information display processing apparatus 120 and proceeds to step S1420.

In step S1420, screen display processing section 113 receives a notification indicating that "transition to another screen is unnecessary." Upon receiving this notification, screen display processing section 113 exits the standby state and resumes the process (step S1420).

In step S1420, a determination is made as to whether or not the transition to another screen is unnecessary. Since the received notification is "transition to another screen is unnecessary," it is "Yes" in step S1420 and the flow proceeds to step S1421.

In step S 1421, data of the update screen is received which has been received from vehicle-mounted information display processing apparatus 120 by the process in step S1418. After that, the update screen shown by this data is displayed on display screen 112 (step S1422), the fact that the process of displaying the update screen is completed is notified to vehicle-mounted information display processing apparatus 120 (step S1423) and the process is finished.

In the above-described process, the processes from start to end may be performed every time one character is entered to reflect a character string in input character string region 151 shown in FIG. 15, but the present invention is not limited to this. For example, the processes including step S1415 and steps after step S1415 may be performed only when the "confirmation" icon is not operated after a plurality of characters are entered.

In the case where the user performs a confirmation operation involving transition to another screen (step S1420: No), screen display processing section 113 receives the next operation instruction information and corresponding image information from vehicle-mounted information display processing apparatus 120 in aforementioned step S1414 (step S1424). Screen display processing section 113 then causes display screen 112 to display the image indicated by the received image information (step S1425) and ends the process.

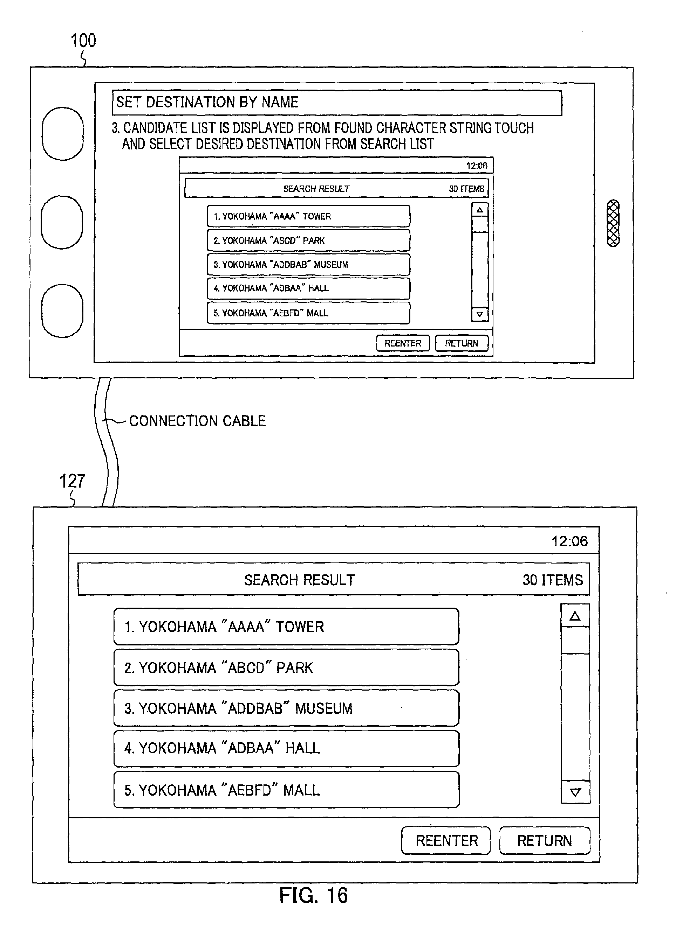

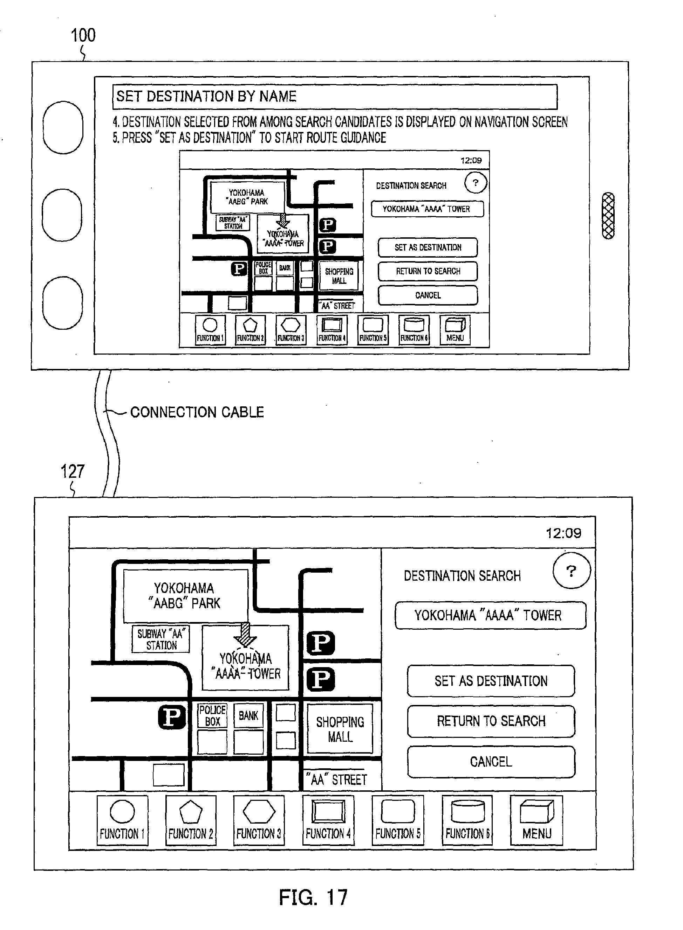

The following case is an example where the user performs confirmation operation involving transition to another screen. As the display contents of display apparatus 127 shown in FIG. 15, for example, a "search" icon may be operated after reflecting a specific character string in input character string region 151. Alternatively, for example, the user may operate a selected icon (icon 161 in FIG. 16) among the display contents (see FIG. 16) after transition to the next screen. Alternatively, for example, the user may operate "set as destination" icon 171 or the like on the display state (see FIG. 17) after the next transition. That is, the aforementioned processing flow is repeated until the user-desired function for vehicle-mounted information display processing apparatus 120 is executed.

As described above, according to the present embodiment, the user can browse the update screen displayed on vehicle-mounted information display processing apparatus 120 to be actually operated or the same screen as the other screen after transition on the screen of portable terminal 100, and can confirm the operation instructions and operation procedure relating to the screen. This allows the user to intuitively understand appropriate operation instructions.

### (Embodiment 4)

Embodiment 4 of the present invention will be described with reference to the accompanying drawings. Embodiment 4 shows another example of application of an information display processing system to a user operation.

An operation example of the vehicle-mounted information display processing system according to the present embodiment will be described. Since a configuration example of the vehicle-mounted information display processing system according to the present embodiment is the same as the configuration shown in FIG. 1 described in Embodiment 1, description will be omitted here.

Embodiment 4 assumes that operation starts from a state in the middle of the operation guidance mode described in above Embodiment 3. That is, the operation which will be described in the present embodiment is regarded as a variation of the operation guidance mode.

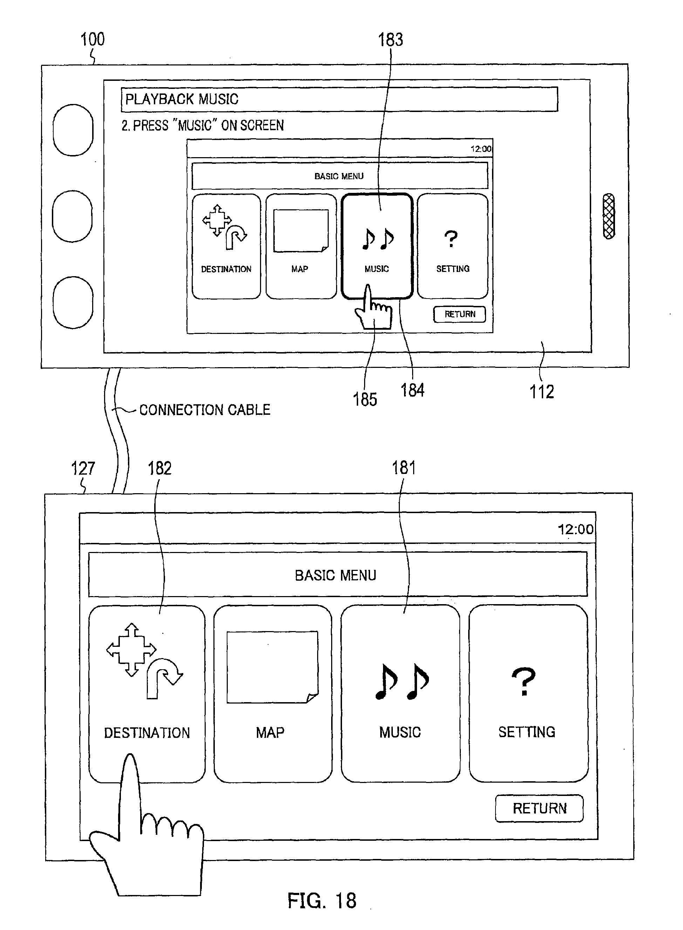

FIG. 18 illustrates a display example of the vehicle-mounted information display processing system according to Embodiment 4 of the present invention. Unlike the state of Embodiment 3, FIG. 18 shows a state in which an operation guidance mode is executed when the user wants to listen to music and a basic menu screen is displayed.

In this state, the user needs to operate a "music" icon (music icon 181) displayed on display apparatus 127. However, if the user operates a "destination" icon by mistake or the like, the user performs display processing of highlighting a figure of a spot to be operated (in this case, "music" icon 181) on display screen 112 of portable terminal 100 that displays operation instruction information,.

FIG. 18 illustrates a screen in which a bold frame and finger arrow icon 185 are added to music icon 181 and highlighting processing is done to prompt the user to perfrom operatioin. However, the method for highlighting processing is not limited to this, but any method may be used as long as the method can prompt the user to perform operation, such as blinking, lighting, a color change, enlargement of the relevant icon (figure).

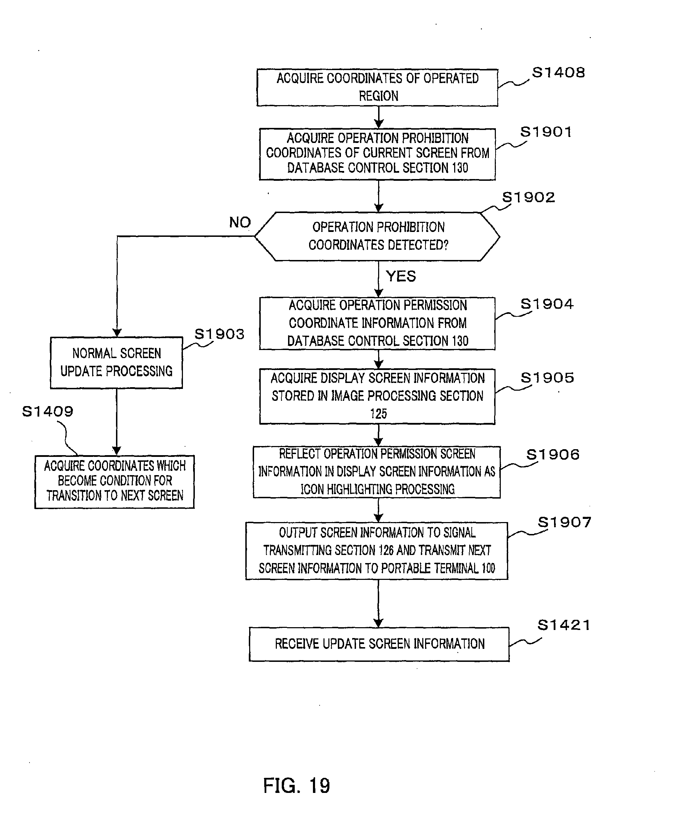

Detailed description of the processing operation of the vehicle-mounted information display processing system according to Embodiment 4 of the present invention will be shown below using FIG. 19.

As described above, the present processing operation follows a flow that starts in the middle of the operation guidance mode described in Embodiment 3 and joins on the way, and therefore description of the part overlapping operation instructions of Embodiment 3 described using FIG. 14 will be omitted.

Central processing section 123 acquires, from operation detection section 121, coordinates on the screen of the region operated by the user, which is the processing in step S1408 in FIG. 14, and then performs the following operation. That is, central processing section 123 acquires operation prohibition coordinates corresponding to the current display contents stored beforehand in operation instruction database 131 via database control section 130 (step S1901). The "operation prohibition coordinates" referred to here are coordinates indicating positions where functions irrelevant to the contents described on the operation instruction information screen currently being displayed are shown.

It is then determined whether or not the contents (position coordinates) operated by the user match the operation prohibition coordinates (step S1902). When the coordinates of the position of the user's operation do not match the operation prohibition coordinates (step S1902: No), the flow proceeds to normal screen update processing (step S1903), and the processing of transition to step S1409 shown in FIG. 14 is continued.

When it is "Yes" in step S1902, that is, when the user makes an operating error, central processing section 123 performs the following operation in order to apply the highlighting processing to the current screen being displayed on display screen 112 of portable terminal 100. That is, central processing section 123 acquires operation permission coordinates via database control section 130 (step S1904), and acquires display screen information stored in image processing section 125 (step S1905). Note that the "operation permission coordinates" referred to here are coordinates indicating positions where functions relevant to the contents described on the operation instruction information screen currently being displayed are shown.

Using the display screen information acquired in step S1905 and the operation permission screen information, synthesis processing is performed for highlighting a figure at an appropriate position (to be operated by he user) (music icon 181 in the example in FIG. 18) to make highlighting reflected (step S1906).

Central processing section 123 transmits the screen information in which the highlighting is reflected to portable terminal 100 via signal transmitting section 126 as the next screen information (step S1907).

In this case, since it is know beforehand that there is no need to transition to another screen, the next process in step S1907 is step S1421 shown in FIG. 14 and the subsequent processes follow the flow shown in FIG. 14.

As described above, according to the present embodiment, even when the user makes an operating error in the middle of the operation guidance mode, it is possible to notify the user of the misoperation and to prompt the user to perform correct operation, allowing the user to confirm operation instructions and the operation procedure more reliably.

In the foregoing embodiments, the present invention is configured with hardware by way of example, but the present invention may also be provided by software in cooperation with hardware.

Although the foregoing description has been given as Embodiments 1 to 4, optionally combining Embodiments 1 to 4 will provide an effect of optionally combined Embodiments 1 to 4.

The disclosure of Japanese Patent Application No. 2013-001767, filed on January 9, 2013, including the specification, drawings and abstract is incorporated herein by reference in its entirety.

### Industrial Applicability

The information display processing system, the information display processing apparatus and the portable terminal according to the present invention are applicable to a system, an apparatus, a method and a program in general that connect a portable terminal and an information display processing apparatus, and display a method of operating the information display processing apparatus on the portable terminal.

### Reference Signs List

- 100: Portable terminal
- 111: Signal receiving section
- 112: Display screen
- 113: Screen display processing section
- 114: Operation detection section
- 115: User IF
- 116: Signal transmitting section
- 120: Vehicle-mounted information display processing apparatus
- 121: Operation detection section
- 122: Signal receiving section
- 123: Central processing section
- 124: Screen display processing section
- 125: Image processing section
- 126: Signal transmitting section
- 127: Display apparatus
- 128: User IF
- 130: Database control section
- 131: Operation instruction database

## Claims

1. An information display processing system in which an information display processing apparatus and a portable terminal communicate with each other, wherein
the information display processing apparatus includes:
a first image processing section that causes a display section of the information display processing apparatus to display one or more images;
a first operation detection section that detects a first specification operation performed by a user to specify a desired image from among the images;
a storage section that stores operation instruction information indicating an operation of the information display processing apparatus; and
a search section that searches the storage section for operation instruction information corresponding to the image specified by the first specification operation based on identification information associated beforehand with the image specified by the first specification operation and identification information associated beforehand with the operation instruction information stored in the storage section; and
a first communication section that transmits the found operation instruction information to the portable terminal, and
the portable terminal includes:
a second communication section that receives the operation instruction information from the information display processing apparatus; and
a second image processing section that causes a display section of the portable terminal to display the operation instruction information.

2. The information display processing system according to claim 1, wherein the portable terminal further includes a second operation detection section that detects a second specification operation performed by the user to specify desired information from the operation instruction information, wherein
the second communication section notifies the information display processing apparatus of the operation instruction information specified by the second specification operation,
the storage section stores the operation instruction information in a tree structure having a root node at the top and stores screen information for each node making up the tree structure,
the search section searches the storage section for a shortest route from the root node to a user specified node which is the operation instruction information specified by the second specification operation, and
the first image processing section displays screen information of each node making up the shortest route in order from screen information of the root node to screen information. of the user specified node.

3. An information display processing apparatus that communicates with a portable terminal, the information display processing apparatus comprising:
an image processing section that causes a display section of the information display processing apparatus to display one or more images;
an operation detection section that detects a specification operation performed by a user to specify a desired image from among the images;
a storage section that stores operation instruction information indicating an operation of the information display processing apparatus;
a search section that searches the storage section for operation instruction information corresponding to the image specified by the specification operation based on identification information associated beforehand with the image specified by the specification operation and identification information associated beforehand with the operation instruction information stored in the storage section; and
a communication section that transmits the found operation instruction information to the portable terminal.

4. The information display processing apparatus according to claim 3, wherein:
the storage section stores the operation instruction information in a tree structure having a root node at the top and stores screen information for each node making up the tree structure,
the communication section receives the operation instruction information specified by the user from the operation instruction information displayed on a display section of the portable terminal,
the search section searches the storage section for a shortest route from the root node to a user specified node which is the user specified operation instruction information, and
the image processing section displays screen information of each node making up the shortest route in order from screen information of the root node to screen information of the user specified node.

5. A portable terminal that communicates with an information display processing apparatus, the portable terminal comprising:
a communication section that receives operation instruction information indicating an operation of the information display processing apparatus from the information display processing apparatus; and
an image processing section that causes a display section of the portable terminal to display the operation instruction information, wherein
the operation instruction information is operation instruction information corresponding to an image specified by a user from among images displayed on a display section of the information display processing apparatus.

6. The portable terminal according to claim 5, wherein
the portable terminal further includes an operation detection section that detects a specification operation performed by a user to specify desired information from the operation instruction information, wherein
the communication section notifies the information display processing apparatus of the operation instruction information specified by the specification operation.
